# EUROPÄISCHE PATENTSCHRIFT

(11) **EP 4 283 168 B1**
(45) Veröffentlichungstag und Bekanntmachung des Hinweises auf die Patenterteilung: **29.10.2025**
(21) Anmeldenummer: 22175178.7
(22) Anmeldetag: 24.05.2022
(51) Int. Cl.: F16K 5/04, F16K 5/10, F16K 3/26, F16K 3/34, B08B 3/02, B05B 9/00, B05B 9/04, B05B 12/00

(54) **HOCHDRUCKREINIGER MIT EINER DRUCKVERSTELLEINRICHTUNG**
HIGH-PRESSURE CLEANER WITH A PRESSURE ADJUSTING DEVICE
NETTOYEUR HAUTE PRESSION AVEC UN DISPOSITIF DE RÉGLAGE DE PRESSION

(43) Veröffentlichungstag der Anmeldung: 29.11.2023
(73) Patentinhaber: Andreas Stihl AG & Co. KG, 71336 Waiblingen (DE)
(72) Erfinder: TOST, Christopher, 71549 Auenwald (DE); HILLER, Lukas, 73527 Schwäbisch Gmünd (DE)
(74) Vertreter: Karzel, Philipp

(56) Entgegenhaltungen:
- EP-A1- 2 695 816
- WO-A1-2006/053414
- WO-A1-2014/123459
- GB-A- 2 443 397
- US-A- 3 228 652
- US-A- 5 108 075
- US-A1- 2016 288 148
- US-A1- 2020 325 996
- US-A1- 2020 378 515

## Beschreibung

Die Erfindung betrifft einen Hochdruckreiniger mit einer Druckverstelleinrichtung nach Anspruch 1.

Hochdruckreiniger dienen dazu, eine Reinigungsflüssigkeit, insbesondere Wasser, unter Druck zu setzen, und diese anschließend über einen Spritzaufsatz, beispielsweise eine Lanze mit Düsenkopf, auszustoßen und Gegenstände mit dem Flüssigkeitsstrahl zu reinigen. Zur Erzeugung des Druckes umfasst der Hochdruckreiniger eine Pumpe, die an ihrem Einlass mit einer Ansaugleitung, auch Niederdruckleitung genannt, und an ihrem Auslass mit einer Druckleitung, auch Hochdruckleitung genannt, verbunden ist. Über die Ansaugleitung wird der Pumpe Flüssigkeit zugeführt. Die Flüssigkeit wird durch die Pumpe unter Druck gesetzt und aus dem Auslass der Pumpe in die Druckleitung überführt. Ist der Spritzaufsatz geöffnet, strömt die Flüssigkeit unter hohem Druck aus dem Spritzaufsatz aus. Dokument US 2016/288148 A1 offenbart eine Spritzpistole eines Hochdruckreinigers. Dokument WO 2006/053414 Al offenbart ein rotatorisches Schieberventil für industrielle Anwendungen.

Es sind Hochdruckreiniger bekannt, die eine Verstellung des Druckes an der Druckleitung vorsehen, um den Volumenstrom an dem Spritzaufsatz regulieren zu können. Eine Möglichkeit zur Regulierung des Volumenstroms ist einen Bypass zwischen der Druckleitung und der Ansaugleitung vorzusehen. In dem Bypass ist ein einstellbarer, minimaler Durchflussquerschnitt vorgesehen. Ist der minimale Durchflussquerschnitt erhöht, stellt sich an der Druckleitung ein erhöhter Verluststrom zur Ansaugleitung ein, wodurch der Druck in der Druckleitung und damit auch der Volumenstrom bei offenem Spritzaufsatz reduziert ist. Wird der Bypass geschlossen, entsteht kein Verluststrom. In der Druckleitung liegt der maximale Druck an, wodurch ein maximaler Volumenstrom bei offenem Spritzaufsatz ermöglicht ist.

Im Bypass ist zur Einstellung des minimalen Durchflussquerschnittes ein Ventil vorgesehen, welches einen Ventilsitz und einen mit dem Ventilsitz zusammenwirkenden Ventilkörper umfasst. Ist das Ventil in geschlossenem Zustand, sitzt der Ventilkörper auf dem Ventilsitz, wodurch der Bypass zwischen der Druckleitung und der Ansaugleitung geschlossen ist. Zum Öffnen des Ventils ist der Ventilkörper vom Ventilsitz zu heben, wodurch das Ventil einen minimalen Durchflussquerschnitt freigibt. Das Abheben des Ventilkörpers vom Ventilsitz erfolgt durch eine translatorische Bewegung. Das Ventil ist dabei derart ausgebildet, dass sich mit zunehmendem Abstand zwischen Ventilkörper und Ventilsitz der minimale Durchflussquerschnitt vergrößert, wodurch der Druck in der Druckleitung abfällt. Derartige Systeme sind äußert komplex und unterliegen einer hohen Fertigungsgenauigkeit. Dadurch sind entsprechende Systeme recht kostenintensiv. Auch die Einstellung eines gezielten Druckes in der Druckleitung hat sich als äußerst schwierig erwiesen.

Der Erfindung liegt die Aufgabe zugrunde, einen Hochdruckreiniger mit einer Druckverstelleinrichtung anzugeben, wobei die Druckverstelleinrichtung einen einfachen Aufbau aufweist und zugleich eine robuste Einstellung des Druckes in einer Druckleitung des Hochdruckreinigers ermöglicht.

Die Erfindung wird durch einen Hochdruckreiniger mit den Merkmalen des Anspruchs 1 gelöst.

Die Druckverstelleinrichtung für einen Hochdruckreiniger umfasst ein Ventilgehäuse mit einem Ventilsitz, mindestens einen Einlass zum Zuführen einer Flüssigkeit, mindestens einen Auslass zum Abführen der Flüssigkeit und einen Ventilkörper mit einer Längsmittelachse, wobei der Ventilkörper in dem Ventilgehäuse um seine Längsmittelachse schwenkbar gelagert ist, wobei der Ventilkörper bezogen auf seine Längsmittelachse umfangsseitig ein dem Ventilsitz zugeordnetes Ventilglied aufweist, wobei in einer Schließstellung des Ventilkörpers der Ventilsitz durch das Ventilglied verschlossen ist und die Strömungsverbindung zwischen dem Einlass und dem Auslass unterbrochen ist, wobei der Ventilköper um seine Längsmittelachse von der Schließstellung in einen Offenzustand schwenkbar ist, wobei in dem Offenzustand eine Strömungsverbindung zwischen dem Einlass und dem Auslass mit einem minimalen Durchflussquerschnitt vorgesehen ist, wobei der minimale Durchflussquerschnitt durch eine an dem Ventilglied ausgebildete Strömungseinheit gebildet ist und das Ventilglied derart ausgebildet ist, dass die Größe des minimalen Durchflussquerschnitts in Abhängigkeit eines Schwenkwinkels des Ventilkörpers um seine Längsmittelachse einstellbar ist.

Das Öffnen und Schließen des Ventils der Druckverstelleinrichtung erfolgt durch das Schwenken des Ventilgliedes. Die Strömungseinheit an dem Ventilglied ist derart ausgebildet, dass die Größe des minimalen Durchflussquerschnittes in Abhängigkeit des Schwenkwinkels des Ventilkörpers einstellbar ist. Bei den herkömmlichen, translatorisch bewegbaren Ventilkörpern führt bereits eine geringe Bewegung des Ventilkörpers zu einer großen Änderung des minimalen Durchflussquerschnittes. Somit ist das Druckeinstellverhalten äußerst sensitiv und empfindlich gegenüber Fertigungstoleranzen. Die Strömungseinheit am Ventilglied, welches am Umfang des Ventilkörpers angeordnet ist, ermöglicht eine Einstellung des minimalen Durchflussquerschnittes in Abhängigkeit des Schwenkwinkels des Ventilkörpers. Das Druckeinstellverhalten ist weniger sensitiv und unempfindlich gegenüber Fertigungstoleranzen des Ventilkörpers. Ferner ist das rotatorische Bewegungsprinzip des Ventilkörpers mechanisch einfacher zu realisieren als die translatorische Verschiebung eines Ventilkörpers.

Es ist vorteilhaft vorgesehen, dass der Schwenkwinkel in einem Bereich von 0° bis 360°, insbesondere von 0° bis 270°, vorzugsweise von 0° bis 180°, bevorzugt von 0° bis 90° liegt. Ist der Schwenkwinkel zu groß gewählt, kann dies zu einer zu langen Einstelldauer des Druckes führen. Daher ist der Schwenkwinkel zur Einstellung des minimalen Durchflussquerschnittes ausreichend gering gewählt, so dass die Einstellung des Druckes über das gesamte Druckspektrum auf schnelle Weise erfolgen kann. Der gewählte Schwenkwinkel erlaubt eine einfache und schnelle Einstellung des Ventilkörpers von Hand, da der für den Bediener zu schwenkende Winkel bereits mit einer einzigen Handbewegung erfolgen kann. So kann vorteilhaft vorgesehen sein, dass die Druckverstelleinrichtung eine auf das erste Ende des Ventilkörpers wirkende Betätigungseinheit zum Schwenken des Ventilkörpers umfasst. Besonders vorteilhaft umfasst die Betätigungseinheit eine Rastung zum stufenweisen Schwenken des Ventilkörpers. Die Rastung weist mehrere Stufen, vorzugsweise drei Stufen auf. Es kann auch zweckmäßig sein, mehr als 3 Stufen vorzusehen. Die Betätigungseinheit weist eine erste Schwenkrichtung und eine der ersten Schwenkrichtung entgegengesetzte zweite Schwenkrichtung auf. Der minimale Durchflussquerschnitt der Strömungseinheit erhöht sich beim Schwenken des Ventilkörpers ausgehend von der Schließstellung in die erste Schwenkrichtung. Wird der Ventilkörper in die zweite Schwenkrichtung zurückgeschwenkt, verringert sich der minimale Durchflussquerschnitt in der Strömungseinheit. Zudem erlaubt der geringe Schwenkwinkel auch eine schnelle Einstellung über einen Elektromotor. Bevorzugt umfasst die Betätigungseinheit einen Stellmotor (Servomotor) oder einen Schrittmotor zum Schwenken des Ventilkörpers. Es können auch andere Motoren zweckmäßig sein. Dadurch wird ein automatisches Einstellen des minimalen Durchflussquerschnittes ermöglicht.

Es ist vorteilhaft vorgesehen, dass die Strömungseinheit als Kulisse an einem Umfangsabschnitt des Ventilgliedes ausgebildet ist. Demnach wird über die Kulisse eine Strömungsverbindung zwischen dem Einlass der Druckverstelleinrichtung und dem Auslass der Druckverstelleinrichtung hergestellt. Zur Einstellung des minimalen Durchflussquerschnittes ist der Ventilkörper mit der Kulisse entsprechend zum Ventilsitz zu positionieren. Die Kulisse ist vorzugsweise derart ausgebildet, dass der Druck am Einlass kontinuierlich verstellbar ist. Wird das Ventilglied mit der Kulisse ausgehend von der Schließstellung in die erste Schwenkrichtung geschwenkt, nimmt der minimale Durchflussquerschnitt zu, wodurch sich der Druck am Einlass reduziert. Wird das Ventilglied mit der Kulisse in die zweite Schwenkrichtung zur Schließstellung hin geschwenkt, reduziert sich der minimale Durchflussquerschnitt, wodurch sich der Druck am Einlass erhöht.

Mit zunehmender Länge der Kulisse, also dem Winkelabstand der beiden Enden der Kulisse zueinander, erhöht sich die Einstellauflösung des minimalen Durchflussquerschnittes. Ferner nimmt die Sensitivität der Druckeinstellvorrichtung bei der Einstellung des minimalen Durchflussquerschnitts und des damit verbundenen Druckes am Einlass der Druckeinstelleinrichtung ab. Somit ist die Druckverstelleinrichtung weniger empfindlich gegenüber hohen Fertigungstoleranzen oder ungenauer Einstellung des Schwenkwinkels. Mit abnehmender Länge der Kulisse ist eine mechanisch schnellere Verstellung des minimalen Durchflussquerschnittes und des damit verbundenen Druckes am Einlass möglich. Aus diesen Erkenntnissen haben sich die folgenden Werte für die Kulisse ergeben. Die Kulisse des Ventilgliedes erstreckt sich von ihrem ersten Ende bis zu ihrem zweiten Ende über einen bezüglich der Längsmittelachse gemessenen Winkelabstand, wobei der Winkelabstand mindestens 30° beträgt. Bevorzugt beträgt der Winkelabstand mindestens 60°, insbesondere mindestens 90°, vorzugsweise in etwa 120°. Vorteilhaft beträgt der Winkelabstand zwischen dem ersten Ende und dem zweiten Ende der Kulisse höchstens 270°, vorzugsweise höchstens 180°, insbesondere höchstens 150°.

Über den Mindestwinkelabstand der Enden der Kulisse ist gewährleistet, dass der minimale Durchflussquerschnitt und damit auch der am Einlass anliegende Druck eine hohe Einstellauflösung aufweist. Der Höchstwinkelabstand der Enden der Kulisse ist derart gewählt, dass der resultierende Verstellweg ausreichend kurz gehalten ist, um ein schnelles Verstellen des minimalen Durchflussquerschnittes zu ermöglichen.

Es ist vorteilhaft vorgesehen, dass die Kulisse derart ausgebildet ist, dass die Größe des minimalen Durchflussquerschnitts zumindest teilweise linear in Abhängigkeit des Schwenkwinkels des Ventilkörpers um seine Längsmittelachse einstellbar ist. Dadurch gestaltet sich die Einstellung des Druckes für den Bediener sehr intuitiv.

Es ist bevorzugt vorgesehen, dass das Ventilglied eine senkrecht zur Längsmittelachse ausgerichtete Querebene aufweist, wobei die Querebene den Ventilkörper mit der Kulisse in einer Querschnittsfläche schneidet, wobei die Querschnittsfläche an der Kulisse durch mehrere Sehnen begrenzt ist. Die Sehnen entsprechen dem Grund der Kulisse. Durch diese Ausgestaltung der Kulisse kann das Ventilglied mit der Kulisse auf einfache Weise gefertigt, insbesondere gefräst werden.

Vorzugsweise weist der Ventilsitz einen Strömungskanal auf, wobei der Strömungskanal gegenüber dem Ventilglied derart angeordnet ist, dass der Strömungskanal im Offenzustand des Ventilgliedes in eine Abströmöffnung der Strömungsverbindung mündet. Der Strömungskanal kann bevorzugt als eine Düse ausgebildet sein.

Es ist insbesondere vorgesehen, dass an dem Ventilkörper stromabwärts des Ventilsitzes ein Rückschlagelement vorgesehen ist, wobei das Rückschlagelement als ein am Ventilkörper angeordneter O-Ring ausgebildet ist. Vorzugsweise weist der Ventilkörper ein erstes freies Längsende und ein zweites Längsende auf, wobei der Ventilkörper an seinem zweiten Längsende in Richtung der Längsmittelachse über ein Axiallager am Ventilgehäuse gelagert ist. Bevorzugt umfasst das Axiallager eine am zweiten Ende des Ventilkörpers ausgebildete Aufnahme und mindestens eine in der Aufnahme gehaltene Kugel, wobei der Ventilkörper über die Kugel gegenüber dem Ventilgehäuse abgestützt ist. Die in der Aufnahme gehaltene Kugel stellt eine einfache Konstruktion eines Axiallagers da und dient zur Minimierung der Reibung beim Schwenken des Ventilkörpers. Es kann auch zweckmäßig sein, mehrere Kugeln zur Abstützung des Ventilkörpers vorzusehen.

Weitere Merkmale der Erfindung ergeben sich aus der Beschreibung und der Zeichnung, in der ein nachfolgend im Einzelnen beschriebenes Ausführungsbeispiel der Erfindung dargestellt ist. Es zeigen:
- Fig. 1: in perspektivischer, schematischer Darstellung einen Hochdruckreiniger,
- Fig. 2: in einer schematischen Darstellung eine Druckverstelleinrichtung angebunden an einer Druckleitung und einer Ansaugleitung eines Hochdruckreinigers,
- Fig. 3: in einer perspektivischen Darstellung einen Ventilkörper und einen Ventilsitz der Druckverstelleinrichtung nach Fig. 2
- Fig. 4: in einer perspektivischen, ausschnittsweisen Darstellung den Ventilkörper mit Kulisse
- Fig. 5: in einer Schnittdarstellung die Druckverstelleinrichtung mit Ventilsitz,
- Fig. 6: in einer Schnittdarstellung entlang der Schnittlinie zwischen den Pfeilen VI nach Fig. 5 die Druckverstelleinrichtung,
- Fig. 7: in einer Schnittdarstellung der Ventilkörper mit Ventilsitz in Schließstellung und Referenzstellung,
- Fig. 8: in einer Schnittdarstellung die Druckverstelleinrichtung in Referenzstellung,
- Fig. 9: in einer ausschnittsweisen Schnittdarstellung die Anordnung des Ventilgliedes und des Ventilsitzes in Referenzstellung,
- Fig. 10: in einer Schnittdarstellung die Druckverstelleinrichtung in Startstellung,
- Fig. 11: in einer ausschnittsweisen Schnittdarstellung die Anordnung des Ventilgliedes und des Ventilsitzes in Startstellung,
- Fig. 12: in einer Schnittdarstellung die Druckverstelleinrichtung in Schließstellung,
- Fig. 13: in einer ausschnittsweisen Schnittdarstellung die Anordnung des Ventilgliedes und des Ventilsitzes in Schließstellung und
- Fig. 14: ein schematisches Diagramm des Druckverlaufes in Abhängigkeit des Schwenkwinkels.

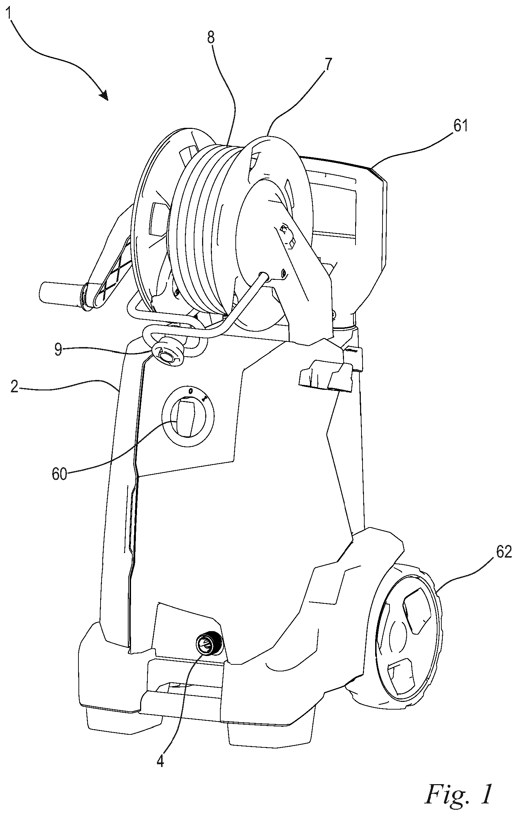

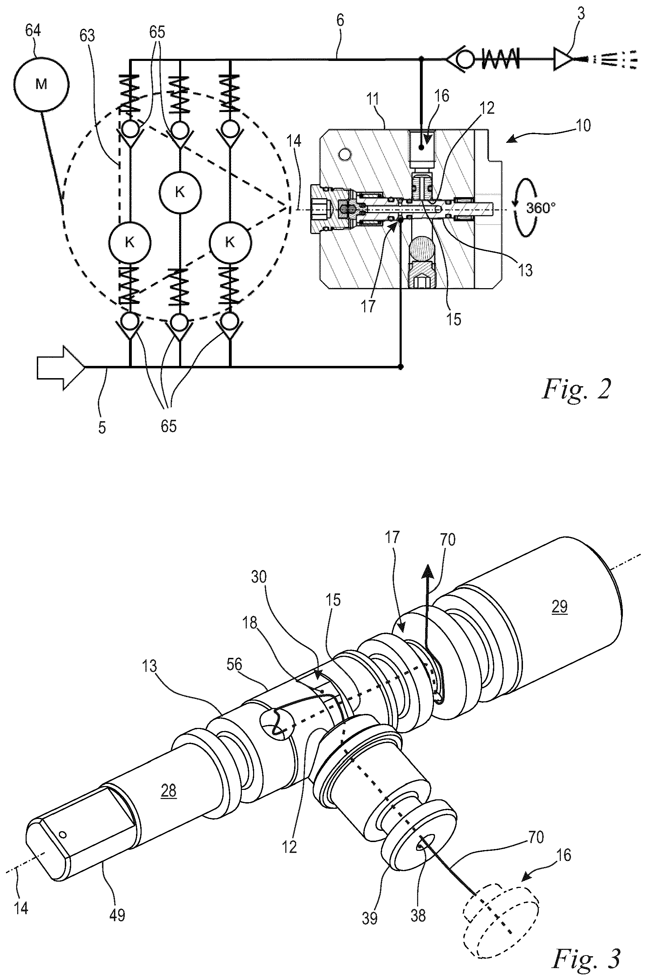

Fig. 1 zeigt eine schematische Darstellung einer Ausführung des erfindungsgemäßen Hochdruckreinigers 1. Der Hochdruckreiniger 1 umfasst ein Gehäuse 2, das einzelne Systemkomponenten einer Hydraulikeinheit umgibt und diese beispielsweise vor Spritzwasser schützt. An dem Gehäuse 2 ist ein Niederdruckanschluss 4 vorgesehen, über welchen eine Ansaugleitung 5 (Fig. 2) des Hochdruckreinigers 1 mit einem externen Flüssigkeitsanschluss, insbesondere mit einem Wasseranschluss, verbindbar ist. Demnach wird dem Hochdruckreiniger 1 in dessen Betrieb über den Niederdruckanschluss 4 eine Reinigungsflüssigkeit zugeführt. Die Reinigungsflüssigkeit ist vorzugsweise Wasser. Es können auch andere Flüssigkeiten, beispielsweise Wasser versetzt mit einem Reinigungsmittel, als Reinigungsflüssigkeit vorgesehen sein. Auf dem Gehäuse 2 des Hochdruckreinigers 1 ist eine Schlauchtrommel 7 vorgesehen. Auf der Schlauchtrommel 7 ist ein Hochdruckschlauch 8 aufgewickelt. Der Hochdruckschlauch 8 ist an seinem einen Ende mit einer Druckleitung 6 des Hochdruckreinigers 1 verbunden (Fig. 2). An dem anderen Ende des Hochdruckschlauchs 8 ist ein Druckanschluss 9 vorgesehen, an dem ein Spritzaufsatz 3 (Figur 2), beispielsweise eine Spritzpistole mit einem Düsenkopf, anschließbar ist.

Wie in Fig. 1 gezeigt, umfasst der Hochdruckreiniger 1 einen Betätigungsschalter 60, mittels dessen der Hochdruckreiniger 1 an- und ausgeschaltet werden kann. Zudem ist auf der Oberseite des Gehäuses 2 ein Haltegriff 61 vorgesehen. Der Hochdruckreiniger 1 kann an seinem Haltegriff 61 angehoben, insbesondere getragen oder über seine an der Unterseite des Gehäuses 2 angeordneten Räder 62 gezogen werden.

Wie in Fig. 2 gezeigt, umfasst der Hochdruckreiniger 1 eine Pumpe 63, die durch einen Antriebsmotor 64 angetrieben ist. Der Antriebsmotor 64 ist im Ausführungsbeispiel als Elektromotor ausgebildet. In einer alternativen Ausführung des Hochdruckreinigers 1 sind auch andere Arten des Antriebsmotors 64 denkbar. Über die Ansaugleitung 5 wird der Pumpe 63 Flüssigkeit zugeführt. Vom Antriebsmotor angetrieben fördert die Pumpe 63 die Flüssigkeit unter Hochdruck in die Druckleitung 6. An der Pumpe 63 sind Rückschlagventile 65 vorgesehen, um einen Druckausgleich der Flüssigkeit zwischen der Druckleitung 6 und der Ansaugleitung 5 über die Pumpe 63 zu vermeiden. Ist der Spritzaufsatz 3 verschlossen, steigt der Druck in der Druckleitung 6 an. Nach Erreichen eines Grenzdruckes in der Druckleitung 6 wird der Antriebsmotor 64 abgeschaltet. Hierfür kann beispielsweise ein Druckabschaltventil vorgesehen sein. Ist der Spritzaufsatz 6 geöffnet, strömt die Flüssigkeit von der Pumpe 63 über die Druckleitung 6 zum Düsenkopf des Spritzaufsatzes 3 und strömt dort mit hoher Geschwindigkeit aus.

Wie in Fig. 2 gezeigt, umfasst der Hochdruckreiniger 1 eine Druckverstelleinrichtung 10. Die Druckverstelleinrichtung 10 ist funktional zwischen der Druckleitung 6 und der Ansaugleitung 5 angeordnet. Die Druckverstelleinrichtung 10 ist derart ausgebildet, dass diese in einem Offenzustand (Fig. 3) eine Strömungsverbindung 70 zwischen der Druckleitung 6 und der Ansaugleitung 5 freigibt. Folglich fließt die Reinigungsflüssigkeit unter hohem Druck von der Druckleitung 6 über die Druckverstelleinrichtung 10 zur Ansaugleitung 5. Es entsteht ein Verluststrom zwischen der Druckleitung 6 und der Ansaugleitung 5, der einen Druckabfall in der Druckleitung 6 bewirkt. Mit Abnahme des Druckes in der Druckleitung 6 reduziert sich auch der Volumenstrom am Düsenkopf des Spritzaufsatzes 3 und damit die Geschwindigkeit, mit der die Flüssigkeit aus dem Spritzaufsatz 3 ausströmt. Die Druckverstelleinrichtung 10 ist derart ausgebildet, dass der Verluststrom zwischen der Druckleitung 6 und der Ansaugleitung 5 und damit auch der Druck in der Druckleitung 6 einstellbar ist. Ist die Druckverstelleinrichtung 10 in einer Schließstellung 31, ist die Strömungsverbindung 70 zwischen der Druckleitung 6 und der Ansaugleitung 5 über die Druckverstelleinrichtung 10 unterbunden. In der Schließstellung 31 der Druckverstelleinrichtung 10 liegt kein Verluststrom vor. Der Druck in der Druckleitung 6 ist in Betrieb des Hochdruckreinigers 1 in der Schließstellung 31 der Druckverstelleinrichtung maximal. Folglich ist auch der Volumenstrom am Düsenkopf des Spritzaufsatzes 3 maximal.

Wie in Fig. 2 gezeigt, umfasst die Druckverstelleinrichtung 10 ein Ventilgehäuse 11 und einen Ventilkörper 13 mit einem Ventilglied 15. Der Ventilkörper 13 ist im Ventilgehäuse 11 um seine Längsmittelachse 14 schwenkbar gelagert. Die Druckverstelleinrichtung 10 umfasst einen Ventilsitz 12, wobei der Ventilsitz 12 mit dem Ventilglied 15 des Ventilkörpers 13 in Wirkverbindung steht. Zudem umfasst die Druckverstelleinrichtung 10 einen Einlass 16 zum Zuführen der Flüssigkeit. Die Druckverstelleinrichtung 10 umfasst einen Auslass 17 zum Abführen der Flüssigkeit. Wie in Fig. 2 gezeigt, ist der Einlass 16 der Druckverstelleinrichtung 10 mit der Druckleitung 6 des Hochdruckreinigers 1 strömungsverbunden. Der Auslass 17 der Druckverstelleinrichtung 10 ist mit der Ansaugleitung 5 des Hochdruckreinigers 1 strömungsverbunden. In einer alternativen Ausführung der Druckverstelleinrichtung 10 können auch mehrere Einlässe 16 und / oder mehrere Auslässe 17 vorgesehen sein.

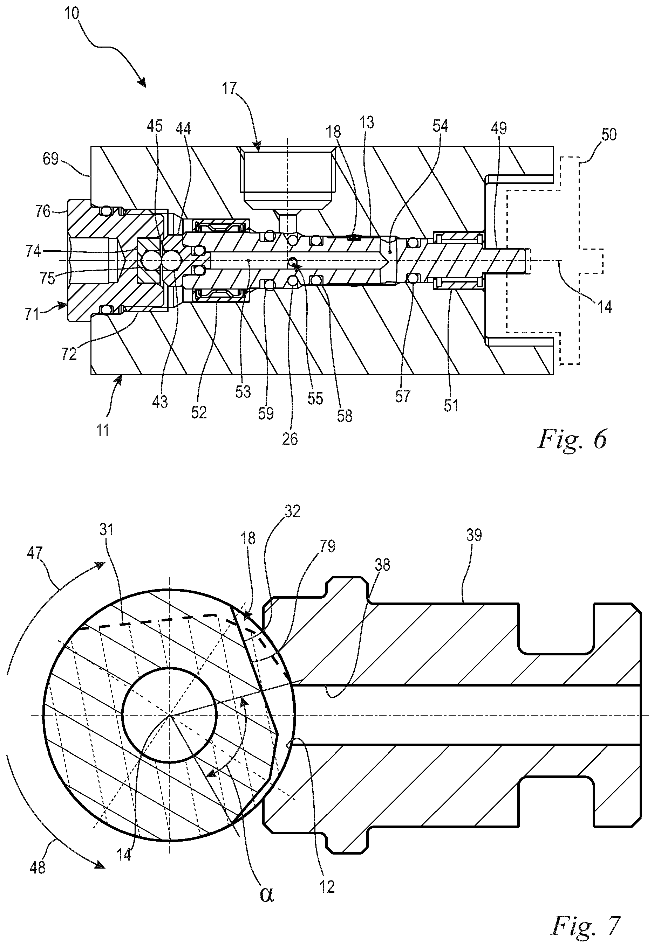

Wie in Fig. 3 gezeigt, ist der Ventilkörper 13 als eine Spindel ausgebildet. Der Ventilkörper 13 erstreckt sich entlang seiner Längsmittelachse 14 von seinem ersten Längsende 41 bis zu seinem zweiten Längsende 42. An dem ersten Längsende 31 ist ein Betätigungsabschnitt 49 ausgebildet. Der Betätigungsabschnitt 49 ist mit einer Betätigungseinheit 50 (Fig. 6) wirkverbunden. Über die Betätigungseinheit 50 kann der Ventilkörper 13 um seine Längsmittelachse 14 geschwenkt werden. Die Betätigungseinheit 50 ist im Ausführungsbeispiel mit den Ventilkörper 13 formschlüssig verbunden. Hierzu ist der Betätigungsabschnitt 49 als ein Flachkant ausgebildet. In einer alternativen Ausführung der Druckverstelleinrichtung 10 kann es zweckmäßig sein, auch andere Verbindungsarten, beispielsweise einen Reibkraftschluss, zwischen der Betätigungseinheit 50 und dem Ventilkörper 13 vorzusehen.

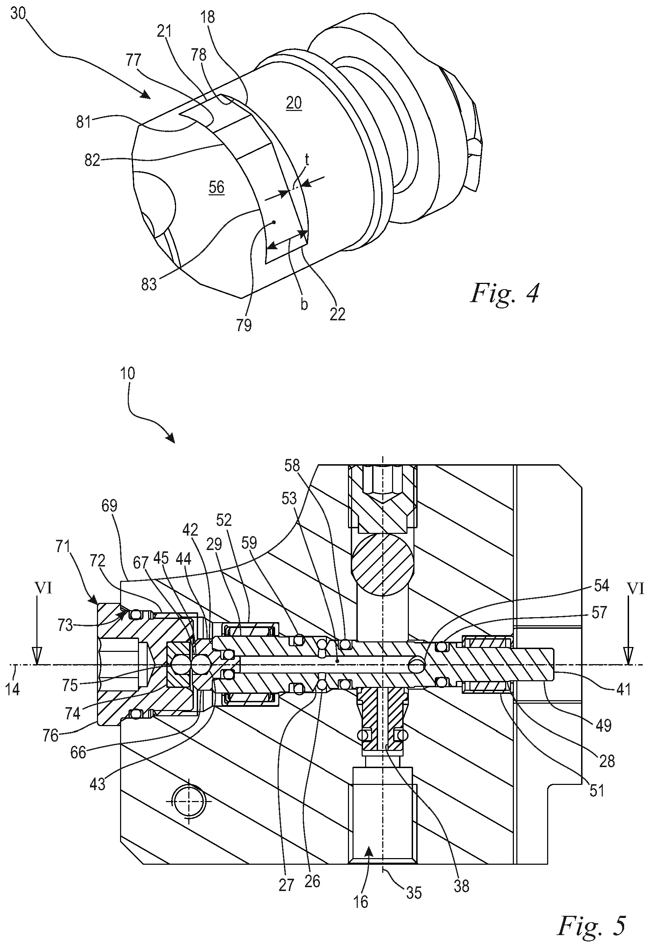

Wie in Fig. 3 gezeigt, umfasst der Ventilkörper 13 mindestens einen umfangsseitig ausgebildeten ersten Lagerabschnitt 28. Das bevorzugte Ausführungsbeispiel der Druckverstelleinrichtung 10 umfasst neben dem ersten Lagerabschnitt 28 einen zweiten Lagerabschnitt 29. Beide Lagerabschnitte 28, 29 sind an der Umfangsfläche des Ventilkörpers 13 ausgebildet. Der erste Lagerabschnitt 28 schließt unmittelbar an dem Befestigungsabschnitt 49 an. Der zweite Lagerabschnitt 29 ist am zweiten Längsende 42 des Ventilkörpers 13 ausgebildet. Wie insbesondere in den Figuren 5 und 6 gezeigt, ist der Ventilkörper 13 über eine Lagerung an dem Ventilgehäuse 11 schwenkbar gelagert. Die Lagerung umfasst im Ausführungsbeispiel zwei Radiallager 51, 52. Das erste Lager 51 ist an dem ersten Lagerabschnitt 28, das zweite Lager 52 an dem zweiten Lagerabschnitt 29 des Ventilkörpers 13 angeordnet. Die Anzahl der Lagerabschnitte 28, 29 des Ventilkörpers 13 korrespondiert mit der Anzahl der Radiallager 28, 29. Die Lager 51, 52 sind im bevorzugten Ausführungsbeispiel als Nadellager ausgebildet. Selbstverständlich können die Lager in einer alternativen Ausführung auch als Gleitlager, insbesondere als Graphitlager oder ähnliche ausgebildet sein. Es kann auch zweckmäßig sein, lediglich ein Radiallager oder mehr als zwei Radiallager vorzusehen.

Wie in Fig. 3 gezeigt, umfasst der Ventilkörper 13 an seiner Umfangsseite das Ventilglied 15 mit einer Strömungseinheit 30. Der Ventilsitz 12 ist dem Ventilglied 15 zugeordnet. Der Ventilsitz 12 ist aus einem im Ventilgehäuse 11 angeordneten Kanaleinsatz 39 gebildet. Dadurch ist die Herstellung des Ventilsitzes 12 vereinfacht. Es kann auch zweckmäßig sein, den Ventilsitz 12 unmittelbar am Ventilgehäuse 11 auszubilden. Der Kanaleinsatz 39 umfasst einen Strömungskanal 38. Das eine Ende des Strömungskanals 38 grenzt unmittelbar am Einlass 16 der Druckverstelleinrichtung 10 an. Das andere Ende des Strömungskanals 38 grenzt an dem Ventilglied 15 an.

Befindet sich die Druckverstelleinrichtung 10 in der Schließstellung 31, ist der Ventilsitz 12 durch das Ventilglied 15 verschossen. Demnach liegt das Ventilglied 15 derart an dem Ventilsitz 12, insbesondere an dem Kanaleinsatz 39, an, dass der Strömungskanal 38 an seinem dem Ventilglied 15 zugewandten Ende verschlossen ist. Die Strömungsverbindung 70 zwischen dem Einlass 16 und dem Auslass 17 ist unterbrochen. Befindet sich die Druckverstelleinrichtung 10 in dem Offenzustand 32, ist die Strömungsverbindung 70 zwischen dem Einlass 16 und dem Auslass 17 freigegeben. Der Ventilkörper 13 ist in dem Offenzustand 32 der Druckverstelleinrichtung 10 derart geschwenkt, dass die Strömungseinheit 30 des Ventilgliedes 15 an dem einen Ende des Strömungskanals 38 anliegt. Der Strömungskanal 38 mündet in dem Offenzustand 32 der Druckverstelleinrichtung 10 in eine Abströmöffnung 25 der Strömungseinheit 30, wodurch die Strömungsverbindung 70 zwischen Einlass 16 und dem Auslass 17 freigegeben ist.

Wie in den Figuren 3, 5, 6 gezeigt, umfasst der Ventilkörper 13 einen an der Umfangsseite des Ventilkörpers 13 ausgebildeten Strömungsabschnitt 56. Der Strömungsabschnitt 56 umgibt die Strömungseinheit 30. Der Strömungsabschnitt 56 des Ventilkörpers 13 ist beabstandet zum Ventilgehäuse 11 ausgebildet. Demnach im Bereich des Strömungsabschnittes 56 zwischen dem Ventilgehäuse 11 und dem Ventilkörper 13 Flüssigkeit strömen. Ferner umfasst der Ventilkörper 13 einen Innenkanal 53. Der Ventilkörper 13 weist eine erste Verbindungsöffnung 54 auf, über die der Innenkanal 53 mit dem Strömungsabschnitt 56 des Ventilkörpers 13 strömungsverbunden ist. Der Ventilkörper 13 weist eine zweite Verbindungsöffnung 55 auf, wobei sich die Verbindungsöffnung 55 von der Umfangsseite des Ventilkörpers 13 zum Innenkanal 53 erstreckt, wodurch dieser mit dem Auslass 17 strömungsverbunden ist. Die Verbindungsöffnungen 54, 55 sind bevorzugt als Bohrungen ausgebildet.

Wie in Fig. 3 gezeigt, ist die Druckverstelleinrichtung 10 derart ausgebildet, dass in ihrem Offenzustand 32 die Strömungsverbindung 70 vom Einlass 16 bis hin zum Auslass 17 über den Strömungskanal 38, die Strömungseinheit 30, den Strömungsabschnitt 56, die erste Verbindungsöffnung 54, den Innenkanal 53 und die zweite Verbindungsöffnung 55 erfolgt.

Wie in Fig. 5 gezeigt, ist der Strömungsabschnitt 56 durch zwei zwischen dem Ventilkörper 13 und dem Ventilgehäuse 11 angeordneten Dichtungen 57, 58 abgedichtet. Die erste Dichtung 57 und die zweite Dichtung 58 sitzen jeweils in einer am Ventilkörper 13 vorgesehen Nut. Die Dichtungen 57, 58 sind im bevorzugten Ausführungsbeispiel durch O-Ringe gebildet. Ferner umfasst die Druckverstelleinrichtung 10 eine dritte Dichtung 59. Die zweite Verbindungsöffnung 55 und damit auch der Auslass 17 sind durch die zweite Dichtung 58 und durch die dritte Dichtung 59 abgedichtet. Auch die dritte Dichtung 59 ist als ein O-Ring ausgebildet und in einer Nut des Ventilkörpers 13 angeordnet. Die gesamte Strömungsverbindung 70 ist gegenüber dem ersten Lager 51 durch die ersten Dichtung 57 abgedichtet. Die gesamte Strömungsverbindung 70 ist gegenüber dem zweiten Lager 52 durch die dritte Dichtung 59 abgedichtet.

Wie in Fig. 5 gezeigt, umfasst die Druckverstelleinrichtung 10 ein Rückschlagelement 26, wobei das Rückschlagelement 26 funktional vor dem Auslass 17 angeordnet ist und eine Strömung in Richtung von dem Auslass 17 zum Einlass 16 hin unterbindet. Das Rückschlagelement 26 ist im bevorzugten Ausführungsbeispiel als ein Dichtring, insbesondere als ein O-Ring ausgebildet. Das Rückschlagelement 26 liegt in einer an der Umfangsseite des Ventilkörpers 13 ausgebildeten Nut 27. Die zweite Verbindungsöffnung 55 mündet in die Nut 27. Die Nut 27 ist im Ausführungsbeispiel keilförmig angeordnet, wobei die Seitenflächen der Nut 27 zur Längsmittelachse 14 hin zusammenlaufen. Die Anordnung aus Rückschlagelement 26 und der Nut 27 ist derart ausgebildet, dass in Schließstellung 31 der Druckverstelleinrichtung 10 das Rückschlagelement 26 dichtend an der Nut 27 anliegt und in dem Offenzustand 32 der Druckverstelleinrichtung 10 das Rückschlagelement 26 durch den Druck der Flüssigkeit radial nach außen gespreizt wird und die Strömungsverbindung 70 freigibt. Wirkt in der Schließstellung 31 Druck der Flüssigkeit vom Auslass 17 in Richtung zum Einlass 16, wird das Rückschlagelement 26 gegen die Nut 27 gepresst und dichtet dadurch die zweite Verbindungsöffnung 55 ab. Ein Rückströmen der Flüssigkeit vom Auslass 17 zum Einlass 16 hin ist unterbunden.

Wie in Fig. 6 gezeigt, umfasst die Druckverstelleinrichtung 10 die Betätigungseinheit 50 zum Schwenken des Ventilkörpers 13 um die Längsmittelachse 14. Die Betätigungseinheit 50 ist im Ausführungsbeispiel der Druckverstelleinrichtung 10 über den Betätigungsabschnitt 49 des Ventilkörpers 13 mit dem Ventilkörper 13 drehfest verbunden. Die Betätigungseinheit 50 ist im Ausführungsbeispiel als ein Drehknopf ausgebildet. Durch den Drehknopf kann der Ventilkörper 13 von Hand geschwenkt werden. Im vorliegenden Ausführungsbeispiel ist der Drehknopf unmittelbar auf dem Betätigungsabschnitt 49 gehalten. Es kann auch vorgesehen sein, dass die Betätigungseinheit 50 ein Getriebe aufweist. In einer solchen Ausführung ist das Bedienelement, hier der Druccknopf mittelbar mit dem Betätigungsabschnitt 50 des Ventilkörpers 13 wirkverbunden. Die Betätigungseinheit 50 ist derart ausgebildet, dass ein stufenloses Schwenken des Ventilkörpers 13 vorgesehen ist. In einer alternativen Ausführung kann es zweckmäßig sein, dass die Betätigungseinheit 50 eine Rastung aufweist. Die Rastung sieht mehrere Schwenkstufen, insbesondere drei Schwenkstufen vor. Es kann auch zweckmäßig sein, mehr als drei Schwenkstufen, insbesondere 4 oder 5 Schwenkstufen vorzusehen. In einer weiteren alternativen Ausgestaltung der Druckverstelleinrichtung 10 kann es zweckmäßig sein, dass die Betätigungseinheit 50 als Druckknopf mit einem Spannwerk, insbesondere einem Sperrspannwerk, ausgebildet ist. In einer solchen Ausführung sieht die Betätigungseinheit 50 ebenfalls mehrere Schwenkstufen des Ventilkörpers 13 vor. In einer weiteren alternativen, nicht näher dargestellten Ausführung der Druckverstelleinrichtung 10 umfasst die Betätigungseinheit 50 einen Stellmotor oder einen Schrittmotor zum Schwenken des Ventilkörpers 13. Das Schwenken des Ventilkörpers 13 kann dann motorisch bzw. automatisch erfolgen. Der Schwenkwinkel wird dann vorzugsweise in Abhängigkeit des vom Bediener betätigten, an dem Spritzaufsatz vorgesehenen Bedienelementes bestimmt.

Wie in Fig. 5 gezeigt, ist der Ventilkörper 13 in Richtung seiner Längsmittelachse 14, also in Axialrichtung des Ventilkörpers 13, gegenüber dem Ventilgehäuse 11 gelagert. Die Druckverstelleinrichtung 10 umfasst ein Axiallager 43. Das Axiallager 43 ist am zweiten Längsende 42 des Ventilkörpers 13 angeordnet. Das Axiallager 43 umfasst mindestens eine Aufnahme 44 und mindestens eine in der Aufnahme 44 gehaltene Kugel 45. Die Aufnahme 44 ist koaxial zur Längsmittelachse 14 ausgerichtet. Demnach schneidet die Längsmittelachse 14 des Ventilkörpers 13 die Kugel 45 in ihrem Mittelpunkt. Die Aufnahme 44 ist durch eine Sacklochbohrung 67 in einem Verschlusselement 66 gebildet. Das Verschlusselement 66 sitzt am zweiten Längsende 42 des Ventilkörpers 13. Der Innenkanal 53 ist als Sacklochbohrung ausgebildet. Das Verschlusselement 66 ragt in den Innenkanal 53, wobei zwischen dem Verschlusselement 66 und dem Ventilkörper 13 eine Dichtung zur Abdichtung des Innenkanals 53 zum zweiten Längsende 42 des Ventilkörpers 13 hin angeordnet ist.

Wie in Fig. 5 gezeigt, ist im Ventilgehäuse 11 eine Montageöffnung 73 zum Einführen des Ventilkörpers 13 in das Ventilgehäuse 11 vorgesehen. Ist der Ventilkörper 13 in dem Ventilgehäuse 11 angeordnet, ist die Montageöffnung 73 zu schließen. Hierfür umfasst das Ventilgehäuse 11 eine Verschlusseinheit 71. Die Verschlusseinheit 71 umfasst eine Verschlussschraube 76 mit einem Gewinde 72, einen Einsatz 74 und eine im Einsatz 74 gehaltene Stützkugel 75. Die Verschlussschraube 76 ist mit dem Grundkörper 69 des Ventilgehäuses 11 verschraubt, wobei zwischen der Verschlussschraube 76 und dem Grundkörper 69 eine Dichtung, insbesondere ein Dichtring, angeordnet ist. Der in der Verschlussschraube 76 gehaltene Einsatz 74 ist koaxial zur Längsmittelachse 14 ausgerichtet. Auch die Stützkugel 75 ist derart in dem Einsatz 74 angeordnet, dass die Längsmittelachse 14 des Ventilkörpers 13 die Stützkugel 75 in ihrem Mittelpunkt schneidet. Die Kugel 45 und die Stützkugel 75 kontaktieren sich. Die Kugel 45 ist in ihrer Aufnahme 44 drehbar gelagert. Die Stützkugel 75 ist in ihrem Einsatz drehbar gelagert. Durch den Punktkontakt zwischen der Kugel 45 und der Stützkugel 75 sind die der Schwenkbewegung des Ventilkörpers 13 entgegenwirkenden Reibungskräfte minimiert.

Im bevorzugten Ausführungsbeispiel sind Bestandteile der Axiallagerung 43 die Aufnahme 44, die Kugel 45, der Einsatz 74 und die Stützkugel 75. Der Kraftfluss der wirkenden Axialkräfte verläuft über den Ventilkörper 13, die Aufnahme 44, die Kugel 45, die Stützkugel 75, dem Einsatz 74, die Verschlussschraube 76 über das Gewinde 72 in den Grundkörper 69 des Ventilgehäuses 11.

Die Druckverstelleinrichtung 10 weist einen minimalen Durchflussquerschnitt 19 innerhalb der Strömungsverbindung 70 zwischen dem Einlass 16 und dem Auslass 17 auf. Der minimale Durchflussquerschnitt 19 ist der Bereich der Strömungsverbindung 70, in dem der minimale Strömungsquerschnitt vorliegt. Der minimale Durchflussquerschnitt 19 ist in der Strömungseinheit 30 vorgesehen. Die Strömungseinheit 30 ist derart ausgebildet, so dass der minimale Durchflussquerschnitt einstellbar ist. Demnach bilden das Ventilglied 15 mit der Strömungseinheit 30 und dem Ventilsitz 12 ein einstellbares Drosselventil. Somit kann der Volumenstrom der Strömungsverbindung 70 zwischen dem Einlass 16 und dem Auslass 17 durch die Strömungseinheit 30 angepasst werden, wodurch der Druck am Einlass 16 und damit in der Druckleitung 6 des Hochdruckreinigers 1 einstellbar ist.

In den Figuren 3 und 4 ist die Strömungseinheit 30 des Ventilgliedes 15 gezeigt. Die Strömungseinheit 30 umfasst. Die Strömungseinheit 30 ist im Ausführungsbeispiel als eine Kulisse 18 ausgebildet. Die Kulisse 18 ist an einem Umfangsabschnitt 20 des Ventilkörpers 13 ausgebildet. Die Kulisse 18 ist als eine Nut ausgebildet. Die Kulisse 18 umfasst eine ersten Seitenfläche 77, eine zweite Seitenfläche 78 sowie einen die Seitenflächen 77, 78 verbindenden Kulissengrund 79. In der Schließstellung 31 der Druckverstelleinrichtung 10 ist das Ventilglied 15 derart gegenüber dem Ventilsitz 12 ausgerichtet, dass der Strömungskanal 38 an seinem dem Ventilglied 15 zugewandten Ende vollumfänglich auf dem Umfangsabschnitt 20 außerhalb der Kulisse 18 anliegt. Der Strömungskanal 38 ist durch den Umfangsabschnitt 20 des Ventilkörpers 13 verschlossen. Um den Strömungskanal 38 freizugeben, ist der Ventilkörper 13 mit dem Ventilglied 15 zu schwenken, bis der Strömungskanal 38 in die Kulisse 18, insbesondere in die Abströmöffnung 25 der Kulisse 18 mündet.

Wie in Fig. 4 gezeigt, weist die Kulisse 18 eine variierende Tiefe t des Kulissengrundes 79 auf. Die Tiefe t des Kulissengrundes 70 ist radial zur Längsmittelachse 14 gemessen. Die Kulisse 18 weist eine Breite b auf, die dem Abstand der Seitenflächen 77, 78 zueinander, gemessen in Richtung der Längsmittelachse 14 entspricht. Im Ausführungsbeispiel ist die Breite b der Kulisse 18 konstant. Durch die variierende Tiefe t des Kulissengrundes 79, stellt sich in Abhängigkeit eines Schwenkwinkels α des Ventilkörpers 13 und der damit verbunden Positionierung des Ventilsitzes 12 zur Kulisse 18 die Größe des minimalen Durchflussquerschnittes 19 ein. Es kann in einer alternativen Ausgestaltung der Druckverstelleinrichtung 10 auch zweckmäßig sein, die Breite b der Kulisse 18 zu variieren, um den minimalen Durchflussquerschnitt 19 einzustellen.

In Fig. 7 ist in einer schematischen Schnittdarstellung in Blickrichtung der Längsmittelachse 14 die Anordnung des Ventilkörpers 13 und des Ventilsitzes 12 in dem Offenzustand 32 und in der Schließstellung 31 gezeigt. Der Ventilkörper 13 ist in der Schließstellung 31 strichliert dargestellt. In der Schließstellung 31 liegt die Kulisse 18 außerhalb des dem Ventilglied 15 zugewandten Endes des Strömungskanals 38. Der Strömungskanal 38 ist durch den Umfangsabschnitt 20 des Ventilgliedes 15 verschlossen. Die Strömungsverbindung 70 zwischen dem Einlass 16 und dem Auslass 17 der Druckverstelleinrichtung 10 ist unterbrochen. Der Ventilkörper 13 ist von der Schließstellung 31 in eine erste Schwenkrichtung 47 um die Längsmittelachse 14 des Ventilkörpers 13 in den Offenzustand 32 zu schwenken. In dem Offenzustand 32 mündet der Strömungskanal 38 in der Kulisse 18 und die Strömungsverbindung 70 ist freigegeben. Vorzugsweise ist der Schwenkwinkel α des Ventilkörpers 13 durch nicht näher dargestellte mechanische Anschläge begrenzt. Der maximale Schwenkwinkel α ist der Winkel, um den der Ventilkörper 13 von der Schließstellung 31 in den Offenzustand 32 zu schwenken, in dem der minimale Durchflussquerschnitt 19 maximal ist. Der maximale Schwenkwinkel α liegt in einem Bereich von 0° bis 360°, vorzugsweise von 0° bis 270°, insbesondere von 0° bis 180°, besonders bevorzugt von 0° bis 90°. Besonders bevorzugt beträgt der maximale Schwenkwinkel α höchstens 90°. Besonders bevorzugt beträgt der maximale Schwenkwinkel α mindestens 30°, bevorzugt mindestens 60°.

Wie insbesondere auch in der Figur 4 gezeigt, ist die Kulisse 18 aus drei, aufeinander folgenden Abschnitten 81, 82, 83, nämlich der erste Abschnitt 81, der zweite Abschnitt 82 und der dritte Abschnitt 83 gebildet. Die Abschnitte 81, 82, 83 bestehen jeweils aus einer in etwa ebenen Fläche, die den Kulissengrund 79 bilden. Der Ventilkörper 13 ist im bevorzugten Ausführungsbeispiel aus einem Metallwerkstoff gebildet. Im bevorzugten Ausführungsbeispiel ist die Kulisse 18 gefräst. In einem ersten Bearbeitungsschritt wird der zweite Abschnitt 82 gefräst, wobei der zweite Abschnitt 82 zwischen dem ersten Abschnitt 81 und dem dritten Abschnitt 83 liegt. Anschließend werden nacheinander der erste Abschnitt 81 und der zweite Abschnitt 83 gefräst. In einer alternativen Ausführung kann es zweckmäßig sein, dass der Ventilkörper 13 aus Kunststoff gebildet ist. In einer solchen Ausführung kann die Kulisse 18 ebenfalls gefräst sein. Bevorzugt wird die Kulisse 18 bereits im Gussverfahren, insbesondere in einem Spritzgussverfahren des Ventilkörpers 13 hergestellt. Ist der Ventilkörper 13 gegossen, kann die Strömungseinheit 30 anstelle der Kulisse 18 auch in Form einer oder mehrere Öffnungen in dem Umfangsabschnitt 20 ausgebildet sein.

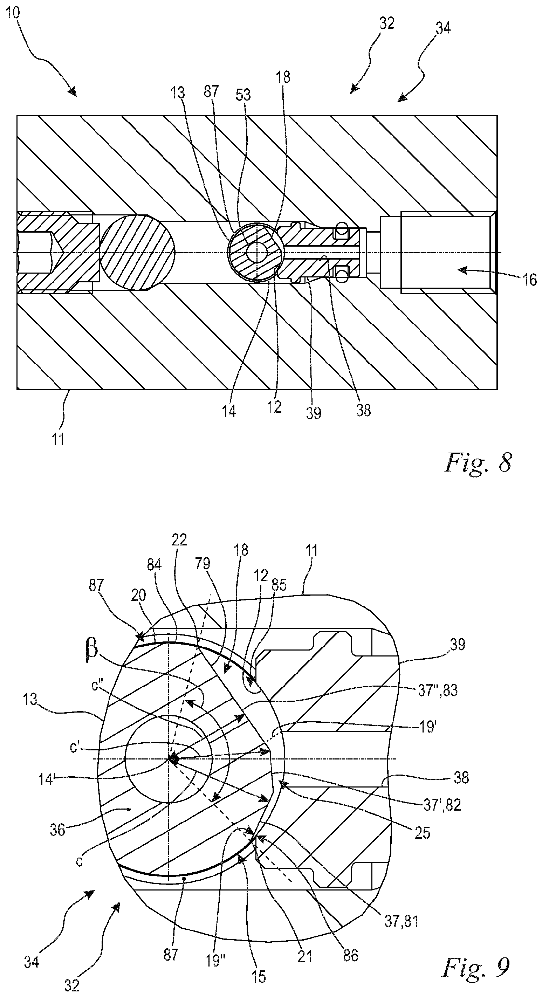

Im vorliegenden Ausführungsbeispiel sind die Abschnitte 81, 82, 83 durch Sehnen 37, 37', 37" bezogen auf eine Querschnittsfläche 36 des Ventilkörpers 13 gebildet, wie in den Figuren 8 bis 13 gezeigt. In diesen Figuren ist das Ventilglied 15 durch eine senkrecht zur Längsmittelachse 14 ausgerichtete Querebene 35 geschnitten. Die Querebene 35 schneidet das Ventilglied 15 an der Kulisse 18 in einer Querschnittsfläche 36. Die Querschnittsfläche 36 ist im Bereich der Kulisse 18 durch die die Kulisse 18 bildenden Sehnen 37, 37', 37" begrenzt. Außerhalb der Sehnen 37, 37', 37" ist die Querschnittsfläche 36 durch einen Kreisbogen 84 des Umfangsabschnittes 20 begrenzt.

Die Sehnen 37, 37', 37" weisen jeweils einen Abstand c" zur Längsmittelachse 14 auf. Der Abstand c der ersten Sehne 37 des ersten Abschnittes 81 der Kulisse 18 zur Längsmittelachse 14 ist größer als der Abstand c' der zweiten Sehne 37' des zweiten Abschnittes 82 der Kulisse 18 zur Längsmittelachse 14. Der Abstand c' der zweiten Sehne 37' des zweiten Abschnittes 82 der Kulisse 18 zur Längsmittelachse 14 ist größer als der Abstand c" der dritten Sehne 37" des dritten Abschnittes 83 der Kulisse 18 zur Längsmittelachse 14.

Wie in Fig. 9 gezeigt, erstreckt sich die Kulisse 18 des Ventilgliedes 15 von einem ersten Ende 21 bis zu einem zweiten Ende 22 über einen bezüglich der Längsmittelachse 14 gemessenen Winkelabstand β. Der Winkelabstand β beträgt im Ausführungsbeispiel bevorzugt mindestens 30°. Bevorzugt beträgt der Winkelabstand β mindestens 60°, insbesondere mindestens 90°, vorzugsweise in etwa 120°. Vorteilhaft beträgt der Winkelabstand β zwischen dem ersten Ende 21 und dem zweiten Ende 22 der Kulisse 18 höchstens 270°, vorzugsweise höchstens 180°, insbesondere höchstens 150°.

In den Figuren 8 und 9 ist die Druckverstelleinrichtung 10 in einem Offenzustand 32 gezeigt, wobei der minimale Durchflussquerschnitt 19 maximal ist. Das Ventilglied 15 ist gegenüber dem Ventilsitz 12 derart ausgerichtet, dass an der Kulisse eine erste Ventilöffnung 85 und eine zweite Ventilöffnung 86 zwischen der Kulisse 18 und dem Ventilsitz 12 ausgebildet sind. Demnach erfolgt die Strömungsverbindung 70 ausgehend von dem Strömungskanal 38 in Richtung zum ersten Ende 21 der Kulisse 18 über die zweite Ventilöffnung 86 und in Richtung zum zweiten Ende 22 der Kulisse 18 über die erste Ventilöffnung 85. Grundsätzlich ergibt sich der minimale Durchflussquerschnitt 19 durch den Abstand zwischen dem Kulissengrund 79 der Kulisse 18 und dem Ventilsitz 12. Der minimale Durchflussquerschnitt 19 ergibt sich aus einem ersten minimalen Durchflussquerschnitt 19' in Strömungsrichtung zur ersten Ventilöffnung 85 hin und aus einem zweiten minimalen Durchflussquerschnitt 19" in Strömungsrichtung zur zweiten Ventilöffnung 86 hin. In dieser Offenstellung 32 nach Fig. 9 ist der erste minimale Durchflussquerschnitt 19' unmittelbar an der zweiten Ventilöffnung 86 zwischen dem Ventilsitz 12 und der ersten Sehne 37 der Kulisse 18 gebildet. Der zweite minimale Durchflussquerschnitt 19" ist zwischen dem Ventilsitz 12 an dem Ende des Strömungskanals 38 und der dritten Sehne 37" der Kulisse 18 gebildet. Ausgehend von den Ventilöffnungen 85, 86 erfolgt die Strömungsverbindung 70 über einen Strömungsraum 87, der durch den Strömungsabschnitt 56 des Ventilkörpers 13 und dem Ventilgehäuse 11 begrenzt ist.

Der in den Figuren 8 und 9 gezeigte Offenzustand 32 wird bevorzugt in einem Ausführungsbeispiel der Druckverstelleinrichtung 10 eingesetzt, in welchem die Betätigungseinheit 50 motorisch ausgebildet ist. In einer solchen Ausführung bildet der Offenzustand 32 eine Referenzlage des Ventilköpers 13 gegenüber dem Ventilsitz 12, wobei an dem Ventilkörper 13 bevorzugt ein Anschlag vorgesehen ist, der in dieser Stellung den Ventilsitz 11 oder das Gehäuse 12 kontaktiert. Eine nicht näher dargestellte Steuerung erkennt somit die Position des Ventilkörpers 13.

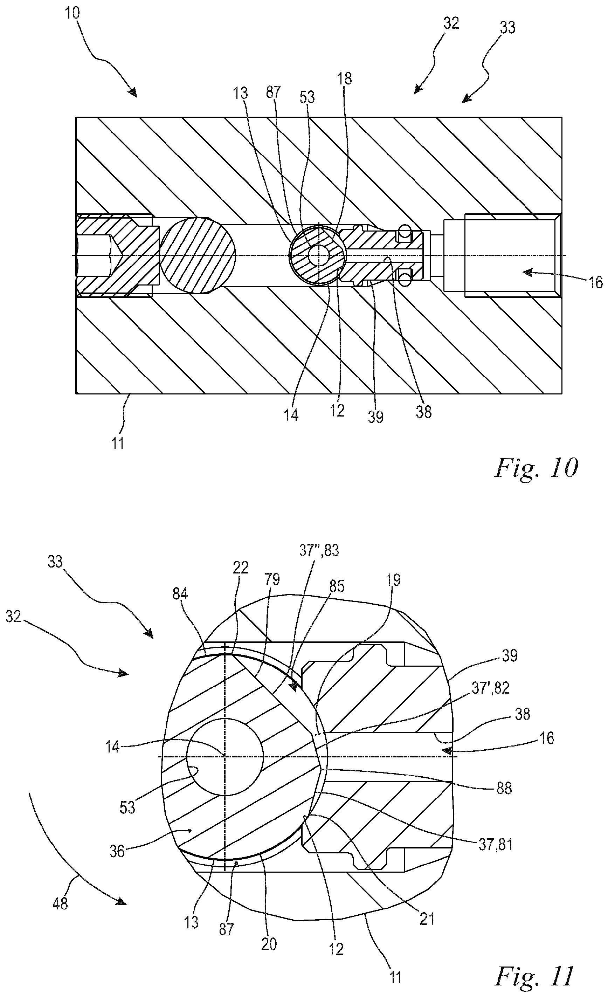

In den Figuren 10 und 11 ist die Druckverstelleinrichtung 10 in einem Offenzustand 32 gezeigt. Der Ventilkörper 13 ist derart ausgerichtet, dass die zweite Ventilöffnung 86 geschlossen ist. Demnach ist der Ventilkörper 13 derart gegenüber dem Ventilsitz 12 positioniert, dass das erste Ende 21 der Kulisse 18 an dem Ventilsitz 12 anliegt. Der Ventilkörper 13 ist derart ausgerichtet, dass lediglich die erste Ventilöffnung 85 geöffnet ist. In dieser Stellung des Ventilgliedes 15 ist der minimale Durchflussquerschnitt 19 durch den Abstand zwischen der zweiten Sehne 37' des zweiten Abschnittes 82 der Kulisse 18 und dem Ventilsitz 12 am Ende des Strömungskanals 38 gebildet. In der bevorzugten Ausführung bildet diese Stellung zwischen Ventilglied 15 und Ventilsitz 12 die Startstellung 33 der Druckverstelleinrichtung 10. Demnach wird zur Einstellung des Verluststromes bzw. des Druckes am Einlass 16 der Druckverstelleinrichtung 10 der Ventilkörper 13 lediglich zwischen der Startstellung 33 und der Schließstellung 31 geschwenkt. Da in diesem Winkelbereich höchstens die erste Ventilöffnung 85 geöffnet ist, lässt sich der minimale Durchflussquerschnitt 19 und damit auch der Druck am Einlass 16 einfacher steuern.

Wie in den Figuren 10 und 11 gezeigt, ist die Kulisse 18 derart ausgebildet, dass sich der minimale Durchflussquerschnitt 19 beim Schwenken in die erste Schwenkrichtung 48 ausgehend von der Startstellung 33 des Ventilkörpers 13 reduziert. Die Kulisse 18 ist derart ausgebildet, dass die Größe des minimalen Durchflussquerschnittes 19 zumindest teilweise linear mit Schwenken des Ventilkörpers 13 in die erste Schwenkrichtung 48 linear abnimmt. Die lineare Zunahme des minimalen Durchflussquerschnittes 19 erfolgt vorzugsweise beim Schwenken des Ventilkörpers 13 von der Startstellung 33 bis in eine Zwischenstellung 80. Die Zwischenstellung 80 liegt dann vor, wenn der minimale Durchflussquerschnitt 19 durch den Abstand zwischen einer Verbindungskante 88 und dem Ventilsitz 12 gebildet ist. Die Verbindungskante 88 ist zwischen der ersten Sehne 37 des ersten Abschnittes 81 und der zweiten Sehne 37' des zweiten Abschnittes 82 ausgebildet. Eine weitere lineare Zunahme des minimalen Durchflussquerschnittes 19 erfolgt vorzugsweise beim Schwenken des Ventilkörpers 13 von der Zwischenstellung 80 in die Schließstellung 31.

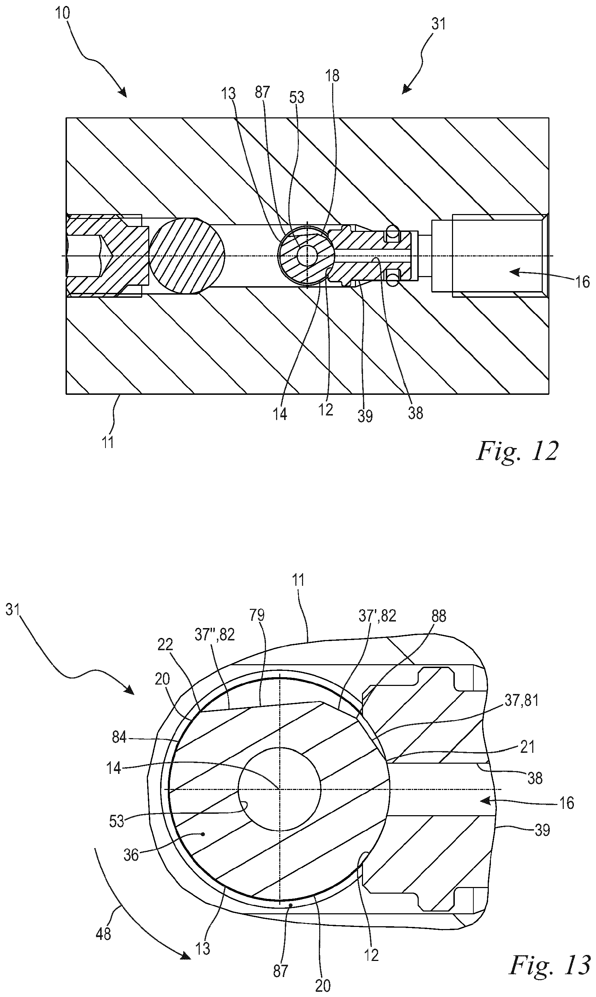

In den Figuren 12 und 13 ist die Druckverstelleinrichtung 10 in der Schließstellung gezeigt. In der Schließstellung 31 der Druckverstelleinrichtung 10 ist die dem Ventilglied 15 zugewandte Öffnung des Strömungskanals 38 durch den Umfangsabschnitt 20 des Ventilgliedes 15 vollständig verschlossen. Die Kulisse 18 ist außerhalb der dem Ventilglied 15 zugewandten Öffnung des Strömungskanals 38 angeordnet. Die Strömungsverbindung 70 zwischen Einlass 16 und Auslass 17 ist unterbunden. Demnach liegt kein Verluststrom vor. Der Druck am Einlass 16 ist maximal.

Wie in den Figuren 10 bis 13 gezeigt, ist die Kulisse 18 derart ausgebildet, dass der minimale Durchflussquerschnitt 19 beim Schwenken von der Startstellung 33 in die Schließstellung 31 kontinuierlich abnimmt. Demnach nimmt der Druck am Einlass 16 beim Schwenken von der Startstellung 33 in die Schließstellung 31 kontinuierlich zu.

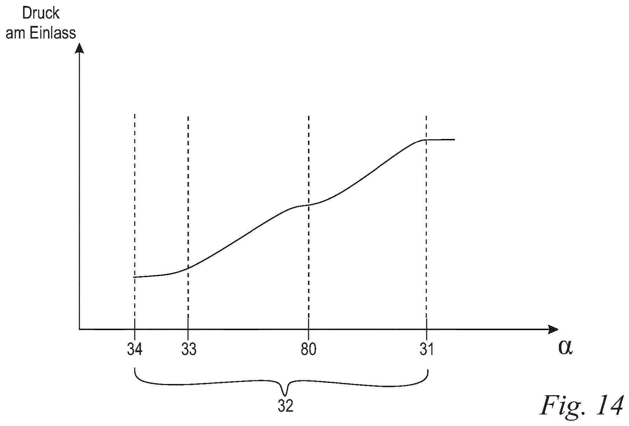

In Fig. 14 ist ein Diagramm gezeigt, das den Druck am Einlass 16 in Abhängigkeit des Schwenkwinkels α ausgehend von der Referenzstellung 34 zeigt. Der Druck nimmt kontinuierlich von der Startstellung 33 bis zur Schließstellung 31 zu. An der Zwischenstellung 80 ist ein leichtes Plateau aufgrund der Verbindungskante 88 zwischen dem ersten Abschnitt 81 und dem zweiten Abschnitt 82 ausgebildet. Erfolgt die Einstellung des Druckes stufenweise, ist es zweckmäßig eine Zwischenstufe im Bereich der Zwischenstellung 80 vorzusehen. Im Bereich des Plateaus ist die Steigung der Drucckurve äußerst gering, demnach die Druckänderung um die Zwischenstellung ebenfalls äußerst gering ist. Dadurch kann auch bei ungenauer Winkelstellung der Betätigungseinheit 50 der für die Zwischenstellung 80 gewünschte Zieldruck sicher erreicht werden.

In der Referenzstellung 34 der Druckverstelleinrichtung 10 liegt der Druck am Einlass 16 vorzugsweise in einem Bereich zwischen 30 und 50 bar. In der Startstellung 33 der Druckverstelleinrichtung 10 liegt der Druck am Einlass 16 vorzugsweise in einem Bereich zwischen 40 und 60 bar. In der Zwischenstellung 80 der Druckverstelleinrichtung 10 liegt der Druck am Einlass 16 vorzugsweise in einem Bereich zwischen 70 und 90 bar. In der Schließstellung 31 der Druckverstelleinrichtung 10 liegt der Druck am Einlass 16 vorzugsweise in einem Bereich zwischen 120 und 150 bar.

## Patentansprüche

1. Hochdruckreiniger mit einer Druckverstelleinrichtung,
umfassend ein Ventilgehäuse (11) mit einem Ventilsitz (12), mindestens einen Einlass (16) zum Zuführen einer Flüssigkeit, mindestens einen Auslass (17) zum Abführen der Flüssigkeit und einen Ventilkörper (13) mit einer Längsmittelachse (14), wobei der Ventilkörper (13) in dem Ventilgehäuse (11) um seine Längsmittelachse (14) schwenkbar gelagert ist, wobei der Ventilkörper (13) bezogen auf die Längsmittelachse (14) umfangsseitig ein dem Ventilsitz (12) zugeordnetes Ventilglied (15) aufweist, wobei in einer Schließstellung (31) des Ventilkörpers (13) der Ventilsitz (12) durch das Ventilglied (15) verschlossen ist und die Strömungsverbindung zwischen dem Einlass (16) und dem Auslass (17) unterbrochen ist, wobei der Ventilköper (13) um seine Längsmittelachse (14) von der Schließstellung (31) in einen Offenzustand (32) schwenkbar ist, wobei in dem Offenzustand (21) eine Strömungsverbindung zwischen dem Einlass (16) und dem Auslass (17) mit einem minimalen Durchflussquerschnitt (19) vorgesehen ist, wobei der minimale Durchflussquerschnitt (19) durch eine an dem Ventilglied (15) ausgebildete Strömungseinheit (30) gebildet ist und das Ventilglied (15) derart ausgebildet ist, dass die Größe des minimalen Durchflussquerschnitts (30) in Abhängigkeit eines Schwenkwinkels (α) des Ventilkörpers (13) um seine Längsmittelachse (14) einstellbar ist.

2. Hochdruckreiniger nach Anspruch 1,
wobei der maximale Schwenkwinkel (α) in einem Bereich von 0° bis 360°, insbesondere von 0° bis 270°, vorzugsweise von 0° bis 180°, bevorzugt von 0° bis 90° liegt.

3. Hochdruckreiniger nach Anspruch 1 oder 2,
wobei die Strömungseinheit (30) als Kulisse (18) an einem Umfangsabschnitt (20) des Ventilgliedes (15) ausgebildet ist.

4. Hochdruckreiniger nach Anspruch 3,
wobei sich die Kulisse (18) des Ventilgliedes (15) von einem ersten Ende (21) bis zu einem zweiten Ende (22) über einen bezüglich der Längsmittelachse (14) gemessenen Winkelabstand (β) erstreckt, wobei der Winkelabstand (β) mindestens 30° beträgt.

5. Hochdruckreiniger nach Anspruch 4,
wobei der Winkelabstand (β) zwischen dem ersten Ende (21) und dem zweiten Ende (22) der Kulisse (18) höchstens 270° beträgt.

6. Hochdruckreiniger nach einem der Ansprüche 3 bis 5,
wobei die Kulisse (18) derart ausgebildet ist, dass der Druck am Einlass (16) kontinuierlich verstellbar ist.

7. Hochdruckreiniger nach einem der Ansprüche 1 bis 6,
wobei die Kulisse (18) derart ausgebildet ist, dass die Größe des minimalen Durchflussquerschnitts (19) zumindest teilweise linear in Abhängigkeit des Schwenkwinkels (α) des Ventilkörpers (13) um seine Längsmittelachse (14) einstellbar ist.

8. Hochdruckreiniger nach einem der Ansprüche 1 bis 7,
wobei das Ventilglied (15) eine senkrecht zur Längsmittelachse (14) ausgerichtete Querebene (35) aufweist, wobei die Querebene (35) den Ventilkörper (13) mit der Kulisse (18) in einer Querschnittsfläche (36) schneidet, wobei die Querschnittsfläche (36) an der Kulisse (18) durch mehrere Sehnen (37, 37', 37") begrenzt ist.

9. Hochdruckreiniger nach einem der Ansprüche 1 bis 8,
wobei der Ventilsitz (12) einen Strömungskanal (38) aufweist, wobei der Strömungskanal (38) gegenüber dem Ventilglied (15) derart angeordnet ist, dass der Strömungskanal (38) im Offenzustand (32) des Ventilgliedes (15) in eine Abströmöffnung (25) der Strömungsverbindung (30) mündet.

10. Hochdruckreiniger nach einem der Ansprüche 1 bis 7,
wobei an dem Ventilkörper (13) stromabwärts des Ventilsitzes (12) ein Rückschlagelement (26) vorgesehen ist, wobei das Rückschlagelement (26) als ein am Ventilkörper (13) angeordneter O-Ring ausgebildet ist.

11. Hochdruckreiniger nach einem der Ansprüche 1 bis 10,
wobei der Ventilkörper (13) ein erstes freies Längsende (41) und ein zweites Längsende (42) aufweist, wobei der Ventilkörper (13) an seinem zweiten Längsende (42) in Richtung der Längsmittelachse (14) über ein Axiallager (43) am Ventilgehäuse (11) gelagert ist.

12. Hochdruckreiniger nach Anspruch 11,
wobei das Axiallager (43) umfasst mindestens eine am zweiten Längsende (22) des Ventilkörpers (13) ausgebildete Aufnahme (44) und mindestens eine in der Aufnahme (44) gehaltene Kugel (45), wobei der Ventilkörper (13) über die mindestens eine Kugel (45) gegenüber dem Ventilgehäuse (11) abgestützt ist.

13. Hochdruckreiniger nach einem der Ansprüche 1 bis 12,
wobei die Druckverstelleinrichtung (10) eine auf das erste Längsende (41) des Ventilkörpers (13) wirkende Betätigungseinheit (50) zum Schwenken des Ventilkörpers (13) umfasst.

14. Hochdruckreiniger nach Anspruch 13,
wobei die Betätigungseinheit (50) einen Stellmotor oder Schrittmotor zum Schwenken des Ventilkörpers (13) umfasst.

15. Hochdruckreiniger nach Anspruch 13,
wobei die Betätigungseinheit (50) eine Rastung zum stufenweisen Schwenken des Ventilkörpers (13) aufweist.

## Claims

1. High-pressure cleaner with a pressure-adjusting device,
said pressure-adjusting device comprising a valve housing (11) with a valve seat (12), at least one inlet (16) for supply of a liquid, at least one outlet (17) for discharge of the liquid, and a valve body (13) with a longitudinal central axis (14), wherein the valve body (13) is mounted in the valve housing (11) so as to be pivotable about its longitudinal central axis (14), wherein the valve body (13) has a valve member (15), assigned to the valve seat (12), circumferentially in relation to the longitudinal central axis (14), wherein, in a closed position (31) of the valve body (13), the valve seat (12) is closed off by the valve member (15) and the flow connection between the inlet (16) and the outlet (17) is interrupted, wherein the valve body (13) is pivotable about its longitudinal central axis (14) from the closed position (31) into an open state (32), wherein, in the open state (21), a flow connection between the inlet (16) and the outlet (17) is provided with a minimum throughflow cross-section (19),
wherein the minimum throughflow cross-section (19) is formed by a flow unit (30) formed on the valve member (15) and the valve member (15) is formed in such a way that the size of the minimum throughflow cross-section (30) is settable as a function of a pivot angle (α) of the valve body (13) about its longitudinal central axis (14).

2. High-pressure cleaner according to Claim 1,
wherein the maximum pivot angle (α) lies in a range from 0° to 360°, in particular from 0° to 270°, preferably from 0° to 180°, with preference from 0° to 90°.

3. High-pressure cleaner according to Claim 1 or 2,
wherein the flow unit (30) is in the form of a slotted guide (18) on a circumferential portion (20) of the valve member (15).

4. High-pressure cleaner according to Claim 3,
wherein the slotted guide (18) of the valve member (15) extends from a first end (21) to a second end (22) over an angular interval (β) measured in relation to the longitudinal central axis (14), wherein the angular interval (β) is at least 30°.

5. High-pressure cleaner according to Claim 4,
wherein the angular interval (β) between the first end (21) and the second end (22) of the slotted guide (18) is at most 270°.

6. High-pressure cleaner according to one of Claims 3 to 5,
wherein the slotted guide (18) is formed in such a way that the pressure at the inlet (16) is adjustable in a continuous manner.

7. High-pressure cleaner according to one of Claims 1 to 6,
wherein the slotted guide (18) is formed in such a way that the size of the minimum throughflow cross-section (19) is, at least partially, settable linearly as a function of the pivot angle (α) of the valve body (13) about its longitudinal central axis (14).

8. High-pressure cleaner according to one of Claims 1 to 7,
wherein the valve member (15) has a transverse plane (35) which is oriented perpendicularly to the longitudinal central axis (14), wherein the transverse plane (35) intersects the valve body (13) at the slotted guide (18) on a cross-sectional surface (36), wherein the cross-sectional surface (36) at the slotted guide (18) is delimited by multiple chords (37, 37', 37").

9. High-pressure cleaner according to one of Claims 1 to 8,
wherein the valve seat (12) has a flow channel (38), wherein the flow channel (38) is arranged in relation to the valve member (15) in such a way that, in the open state (32) of the valve member (15), the flow channel (38) opens out into an outflow opening (25) of the flow connection (30).

10. High-pressure cleaner according to one of Claims 1 to 7,
wherein a non-return element (26) is provided on the valve body (13) downstream of the valve seat (12), wherein the non-return element (26) is in the form of an O-ring arranged on the valve body (13).

11. High-pressure cleaner according to one of Claims 1 to 10,
wherein the valve body (13) has a first, free, longitudinal end (41) and a second longitudinal end (42), wherein, at its second longitudinal end (42), the valve body (13) is mounted on the valve housing (11) in the direction of the longitudinal central axis (14) via an axial bearing (43).

12. High-pressure cleaner according to Claim 11,
wherein the axial bearing (43) comprises at least one receptacle (44), which is formed at the second longitudinal end (22) of the valve body (13), and at least one ball (45), which is held in the receptacle (44), wherein the valve body (13) is supported in relation to the valve housing (11) via the at least one ball (45).

13. High-pressure cleaner according to one of Claims 1 to 12,
wherein the pressure-adjusting device (10) comprises an actuating unit (50) which acts on the first longitudinal end (41) of the valve body (13) and which serves for pivoting the valve body (13).

14. High-pressure cleaner according to Claim 13,
wherein the actuating unit (50) comprises an actuating motor or stepper motor for pivoting the valve body (13).

15. High-pressure cleaner according to Claim 13,
wherein the actuating unit (50) has a detent means for stepwise pivoting of the valve body (13).

## Revendications

1. Nettoyeur haute pression avec un dispositif d'ajustement de pression, comprenant un boîtier (11) de soupape avec un siège (12) de soupape, au moins une entrée (16) destinée à amener un liquide, au moins une sortie (17) destinée à évacuer le liquide et un corps (13) de soupape avec un axe central longitudinal (14), le corps (13) de soupape étant monté de manière à pouvoir pivoter autour de son axe central longitudinal (14) dans le boîtier (11) de soupape, le corps (13) de soupape comportant côté périphérie un organe (15) de soupape associé au siège (12) de soupape par rapport à l'axe central longitudinal (14), le siège (12) de soupape étant fermé par l'organe (15) de soupape dans une position de fermeture (31) du corps (13) de soupape et la communication fluidique entre l'entrée (16) et la sortie (17) étant interrompue, le corps (13) de soupape pouvant pivoter depuis la position de fermeture (31) dans un état ouvert (32) autour de son axe central longitudinal (14), une communication fluidique entre l'entrée (16) et la sortie (17) étant prévue avec une section transversale d'écoulement (19) minimale dans l'état ouvert (21),
la section transversale d'écoulement (19) minimale étant formée par une unité d'écoulement (30) réalisée sur l'organe (15) de soupape et l'organe (15) de soupape étant réalisé de telle manière que la grandeur de la section transversale d'écoulement (30) minimale peut être réglée en fonction d'un angle de pivotement (α) du corps (13) de soupape autour de son axe central longitudinal (14).

2. Nettoyeur haute pression selon la revendication 1,
l'angle de pivotement (α) maximal se situant dans une plage de 0° à 360°, en particulier de 0° à 270°, de préférence de 0° à 180°, de manière préférée de 0° à 90°.

3. Nettoyeur haute pression selon la revendication 1 ou 2,
l'unité d'écoulement (30) étant réalisée comme une coulisse (18) sur une section périphérique (20) de l'organe (15) de soupape.

4. Nettoyeur haute pression selon la revendication 3,
la coulisse (18) de l'organe (15) de soupape s'étendant depuis une première extrémité (21) jusqu'à une seconde extrémité (22) sur une distance angulaire (β) mesurée par rapport à l'axe central longitudinal (14), la distance angulaire (β) étant égale au moins à 30°.

5. Nettoyeur haute pression selon la revendication 4,
la distance angulaire (β) entre la première extrémité (21) et la seconde extrémité (22) de la coulisse (18) étant égale au maximum à 270°.

6. Nettoyeur haute pression selon l'une des revendications 3 à 5,
la coulisse (18) étant réalisée de telle manière que la pression peut être ajustée en continu sur l'entrée (16).

7. Nettoyeur haute pression selon l'une des revendications 1 à 6,
la coulisse (18) étant réalisée de telle manière que la grandeur de la section transversale d'écoulement (19) minimale peut être réglée au moins en partie linéairement en fonction de l'angle de pivotement (α) du corps (13) de soupape autour de son axe central longitudinal (14).

8. Nettoyeur haute pression selon l'une des revendications 1 à 7,
l'organe (15) de soupape comportant un plan transversal (35) orienté perpendiculairement à l'axe central longitudinal (14), le plan transversal (35) coupant le corps (13) de soupape avec la coulisse (18) dans une surface de section transversale (36), la surface de section transversale (36) étant délimitée par plusieurs cordes (37, 37', 37") sur la coulisse (18).

9. Nettoyeur haute pression selon l'une des revendications 1 à 8,
le siège (12) de soupape comportant un canal d'écoulement (38), le canal d'écoulement (38) étant disposé par rapport à l'organe (15) de soupape de telle manière que le canal d'écoulement (38) débouche dans une ouverture pour flux sortant (25) de la communication fluidique (30) dans l'état ouvert (32) de l'organe (15) de soupape.

10. Nettoyeur haute pression selon l'une des revendications 1 à 7,
un élément antiretour (26) étant prévu sur le corps (13) de soupape en aval du siège (12) de soupape, l'élément antiretour (26) étant réalisé comme un joint torique disposé sur le corps (13) de soupape.

11. Nettoyeur haute pression selon l'une des revendications 1 à 10,
le corps (13) de soupape comportant une première extrémité longitudinale (41) libre et une seconde extrémité longitudinale (42), le corps (13) de soupape étant monté sur le boîtier (11) de soupape par un palier axial (43) en direction de l'axe central longitudinal (14) sur sa seconde extrémité longitudinale (42).

12. Nettoyeur haute pression selon la revendication 11,
le palier axial (43) comprenant au moins un logement (44) réalisé sur la seconde extrémité longitudinale (22) du corps (13) de soupape et au moins une bille (45) maintenue dans le logement (44), le corps de soupape (13) étant soutenu par rapport au boîtier (11) de soupape par l'au moins une bille (45).

13. Nettoyeur haute pression selon l'une des revendications 1 à 12,
le dispositif d'ajustement de pression (10) comprenant une unité d'actionnement (50) agissant sur la première extrémité longitudinale (41) du corps (13) de soupape, destinée à faire pivoter le corps (13) de soupape.

14. Nettoyeur haute pression selon la revendication 13,
l'unité d'actionnement (50) comprenant un servomoteur ou un moteur pas-à-pas destiné à faire pivoter le corps (13) de soupape.

15. Nettoyeur haute pression selon la revendication 13,
l'unité d'actionnement (50) comportant un cran pour faire pivoter graduellement le corps (13) de soupape.
